# EUROPÄISCHE PATENTSCHRIFT

(11) **EP 1 142 837 B1**
(45) Veröffentlichungstag und Bekanntmachung des Hinweises auf die Patenterteilung: **26.05.2004**
(21) Anmeldenummer: 01106097.7
(22) Anmeldetag: 13.03.2001
(51) Int. Cl.: C02F 3/10

(54) **Vorrichtung zur biologischen Behandlung von insbesondere Abwasser**
Apparatus for the biological treatment of especially waste water
Dispositif pour le traitement biologique notamment d'eaux usées

(30) Priorität: 05.04.2000 DE 10017537
(43) Veröffentlichungstag der Anmeldung: 10.10.2001
(73) Patentinhaber: NORDDEUTSCHE SEEKABELWERKE GMBH & CO. KG, 26954 Nordenham (DE)
(72) Erfinder: Bittner, Hans-Jürgen, 26954 Nordenham (DE)
(74) Vertreter: Möller, Friedrich, Dipl.-Ing.

(56) Entgegenhaltungen:
- EP-A- 0 761 605
- EP-A- 0 933 335
- DE-A- 19 512 965
- US-A- 5 397 474
- US-A- 5 897 771

## Beschreibung

Die Erfindung betrifft eine Vorrichtung zur biologischen Behandlung von insbesondere Abwasser gemäß dem Oberbegriff des Anspruchs 1.

Vorrichtungen der hier angesprochenen Art werden überwiegend zur biologischen Behandlung von Fluiden, beispielsweise zur biologischen Abwasserbehandlung, eingesetzt EP-A-0 933 335. Dazu weist die Vorrichtung mindestens einen Festbettkörper auf, der in einem mit dem zu behandelnden Abwasser gefüllten Behälter eingetaucht ist. Der aus Kunststoff gebildete Festbettkörper dient als Träger für die zur biologischen Behandlung erforderlichen Bakterien, nämlich eines sogenannten biologischen Rasens.

Der Festbettkörper besteht üblicherweise aus mehreren Teilfestbettkörpern vorzugsweise gleicher Größe. Es ist aber auch denkbar, den Festbettkörper einstückig auszubilden. Jeder Festbettkörper bzw. Teilfestbettkörper setzt sich aus einer größeren Anzahl von Füllkörperblöcken zusammen. Die üblicherweise quaderförmigen Füllkörperblöcke werden gebildet aus rasterartig zusammengesetzten Rohren, die mantelseitig und/oder an ihren gegenüberliegenden Stirnseiten miteinander verbunden sind. Bei den Rohren handelt es sich vorzugsweise um sogenannte Gitterrohren mit netzartig strukturierter Mantelfläche. Die Füllkörperblöcke sind zur Bildung des Festbettkörpers bzw. der Teilfestbettkörper übereinander gestapelt und in Längs- sowie Querrichtung des Behälters nebeneinander angeordnet. Die übereinander gestapelten Füllkörperblöcke des Festbettkörpers bzw. der Teilfestbettkörper bilden jeweils eine Füllkörpersäule, wobei die Gitterrohre der einzelnen übereinanderliegenden Füllkörperblöcke vertikal 1 verlaufen und über die gesamte Höhe der jeweiligen Füllkörpersäule fluchten. Die Längsmittelachsen der einzelnen Gitterrohre unterschiedlicher Füllkörperblöcke erstrecken sich somit durchgehend über die gesamte Höhe der Füllkörpersäule.

Bei bekannten Vorrichtungen dieser Art ruht der Festbettkörper auf einem Traggerüst, das auf dem Boden des Behälters angeordnet ist. Der Festbettkörper wird durch das Traggerüst vom Boden des Behälters beabstandet, wodurch unter dem Festbettkörper Raum zur Anordnung von Belüfterrohren oder dergleichen geschaffen wird. Bei einem sich aus mehreren Teilfestbettkörpern zusammensetzenden Festbettkörpern ruhen die oberen Teilfestbettkörper unmittelbar auf darunter angeordneten Teilfestbettkörpern.

Das Traggerüst wird nur bei leerem Behälter vom Gewicht des Festbettkörpers belastet. Dieses Gewicht setzt sich zusammen aus dem Gewicht des reinen Festbettkörpers und dem Gewicht des daran angesiedelten biologischen Rasens und gegebenenfalls im Festbettkörper gebundenem Schlamm. Das Gesamtgewicht des besiedelten Festbettkörpers ist deshalb deutlich höher als das der reinen Festbettkörper. Im Betriebszustand der Vorrichtung, wenn der Behälter so weit mit zu reinigendem Abwasser oder dergleichen gefüllt ist, dass der Festbettkörper hierin vorzugsweise vollständig eingetaucht ist, neigt der Festbettkörper selbst dann, wenn er aus einem ungeschäumten Kunststoff gebildet ist, zum Aufschwimmen in der Flüssigkeit des Behälters. Bei bekannten Vorrichtungen wird der Festbettkörper dazu mit dem Traggerüst verbunden, wodurch das Gewicht des Traggerüsts ein Aufschwimmen des Festbettkörpers im Behälter verhindert.

Das Traggerüst der bekannten Vorrichtung muss sehr stabil sein, damit es bei leerem Behälter das Gewicht des bewachsenen Festbettkörpers aufnehmen kann. Da das Traggerüst unter dem Festbettkörper in der zu reinigenden Flüssigkeit eingetaucht ist, muss es aus rostfreiem Edelstahl gebildet sein. Außerdem beeinträchtigt das Traggerüst die Durchströmbarkeit des Festbettkörpers. Schließlich behindert das Traggerüst die Zugänglichkeit der Belüftungseinrichtung zu Wartungs- und Reparaturzwecken.

Hiervon ausgehend liegt der Erfindung die Aufgabe zugrunde, eine Vorrichtung zur biologischen Behandlung von insbesondere Abwasser zu schaffen, die einfach aufgebaut ist, die Durchströmbarkeit des Festbettkörpers möglichst wenig beeinträchtigt und zudem preiswert ist.

Eine Vorrichtung zur Lösung dieser Aufgabe weist die Merkmale des Anspruchs 1 auf. Dadurch, dass wenigstens ein Teil des Festbettkörpers hängend im Behälter angeordnet ist, kann das aufwendige (rostfreie) Traggerüst unter dem Festbettkörper entfallen. Der Festbettkörper hängt dann an einem Trag- oder Huborgan, das außerhalb der zu behandelnden Flüssigkeit sich befinden kann und deshalb nicht rostfrei sein muss. Insbesondere lässt sich ein solches Trag- oder Huborgan mindestens größtenteils aus Holz bilden. Das Tragorgan kann gleichzeitig als Huborgan zum Einsetzen und Herausnehmen des Festbetts in bzw. aus dem Behälter dienen. Bei einem aus mehreren Teilfestbettkörpern gebildeten Festbettkörper ist vorzugsweise jedem Teilfestbettkörper mindestens zeitweise ein Trag- und/oder Huborgan zugeordnet. Da dieses nur einen Teil des Festbettkörpers trägt, kann es entsprechend leichter ausgebildet sein.

Die hängende Anordnung des Festbettkörpers bzw. der Teilfestbettkörper im Behälter macht es im Gegensatz zur bisher üblichen stehenden Anordnung im Behälter nicht mehr erforderlich, die einzelnen Füllkörperblöcke zum Festbettkörper bzw. Teilfestbettkörper in einem rostfreien Rahmen zusammenzuhalten. Gegebenenfalls können die Füllkörperblöcke zum Festbettkörper bzw. Teilfestbettkörper durch leichte, dünne Bandagen zusammengehalten werden.

Gemäß Anspruch 2 auf ist mindestens ein Teil des Festbettkörpers an dem Huborgan hängend in den Behälter einsetzbar und aus dem Behälter herausnehmbar. Je nach Größe der Vorrichtung kann der gesamte Festbettkörper an einem einzigen Huborgan hängen. Bei einem Festbettkörper aus mehreren übereinander angeordneten Teilfestbettkörpern wird mit einem Huborgan nacheinander jeder der übereinanderliegenden Teilfestbettkörper in das Becken eingesetzt und aus diesem herausgehoben. Denkbar ist es aber auch, sich über die gesamte Höhe des Festbettkörpers erstreckende Teile desselben in den Behälter einzusetzen bzw. aus diesem herauszuheben. Teile des Festbettkörpers hängen dann quasi scheibchenweise am jeweiligen Huborgan.

Gemäß einer Weiterbildung der Erfindung ist der gesamte Festbettkörper oder auch nur ein Teil desselben lösbar mit dem Huborgan verbunden. Dadurch können mit dem gleichen Huborgan nacheinander Festbettkörper aus verschiedenen Behältern herausgehoben und in diese wieder eingesetzt werden oder einzelne Teile des Festbettkörpers eines Behälters bewegt werden.

Jeder Festbettkörper oder Teilfestbettkörper ist gebildet aus mehreren zur Bildung einer Füllkörpersäule übereinandergestapelten Füllkörperblöcken. Jede dieser Füllkörpersäulen ist einzeln unter dem Trag- oder Huborgan angehängt. Dadurch brauchen die Füllkörperblöcke der einzelnen Füllkörpersäulen nicht miteinander verbunden zu sein. Außerdem ist es möglich, Teile des Festbettkörpers oder auch eines Teilfestbettkörpers selektiv aus dem Behälter herauszunehmen, indem nur diejenigen Füllkörpersäulen mit dem Hub- und/oder Tragorgan verbunden werden, die (beispielsweise zu Wartungs-/Reinigungs- oder Reparaturarbeiten) aus dem Behälter entfernt werden müssen.

Angehängt ist der Festbettkörper oder Teilfestbettkörper, insbesondere jede Füllkörpersäule, an das Trag- oder Huborgan durch einen Zugstrang, der vorzugsweise durch jede Festbettkörpersäule geführt ist, und zwar insbesondere im wesentlichen mittig. Ein oberes Ende des Zugstrangs ist dann nach oben aus der Füllkörpersäule herausgeführt, wodurch sich der jeweilige Zugstrang einfach mit dem Trag- und/oder Huborgan verbinden lässt. Durch das Herausführen des Zugstrangs aus der jeweiligen Füllkörpersäule kann die Verbindung mit dem Trag- und/oder Huborgan oder auch ein Lösen von demselben oberhalb des Flüssigkeitspegels im Behälter erfolgen, so dass gegebenenfalls nicht der gesamte Behälter geleert werden muss, um mindestens Teile des Festbettkörpers auszubauen.

Gemäß einer bevorzugten Ausgestaltung der Erfindung ist das Trag- bzw. Huborgan als ein zweidimensionales Rahmentragwerk ausgebildet. Dieses verfügt vorzugsweise über parallel zueinander verlaufende Querträger und mindestens einen die Querträger verbindenden Längsträger. Es ist aber auch denkbar, dass Trag- bzw. Huborgan nur aus einzelnen nebeneinanderliegenden Trägern bzw. Balken zu bilden, die miteinander nicht verbunden sind. An solchen Trägern bzw. Balken hängen Füllkörpersäulen, die in quer oder längs zum Behälter verlaufenden Reihen nebeneinander angeordnet sind. Diese Füllkörpersäulen bilden dann praktisch eine vertikale Scheibe des Festbettkörpers oder Teilfestbettkörpers. Mit einem Träger oder Balken kann das jeweils eine Scheibe des Festbettkörpers oder Teilfestbettkörpers aus dem Behälter entfernt und in diesen eingesetzt werden.

Die Zugstränge zum Anhängen des Festbettkörpers oder Teile desselben an Träger oder Balken des Trag- und/oder Huborgans sind gemäß einer bevorzugten Ausgestaltung der Erfindung als Tragstangen ausgebildet. Solche Tragstangen lassen sich leicht durch die Füllkörpersäulen hindurchstecken. Mit ihren oben aus den Füllkörpersäulen herausragenden Enden können die Tragstangen einfach mit den Trägern oder Balken verbunden werden. Es besteht dabei die Möglichkeit, den Abstand der Oberseite der Füllkörpersäule gegenüber der Unterseite der Träger oder Balken zu verändern. Damit lässt sich die Eintauchtiefe des Festbettkörpers in den Behälter bzw. die darin angeordnete Flüssigkeit verändern und dadurch den Bedürfnissen anpassen.

Den unteren Ende der Tragstangen sind Auflager für die Unterseiten der untersten Füllkörperblöcke des Festbettkörpers oder des Teilfestbettkörpers, insbesondere der Füllkörpersäulen, zugeordnet. Diese Auflager leiten die Gewichtskraft der Füllkörperblöcke, insbesondere jeder Füllkörpersäule, in die entsprechende Tragstange ein und dienen gleichzeitig dazu, die Flächenpressung im Auflagebereich des unteren Füllkörperblocks auf dem Auflager auf einen zulässigen Wert zu reduzieren.

Es ist weiterhin vorgesehen, denjenigen Teil der auf jeweils einem Auflager sich abstützenden Unterseite eines unteren Füllkörperblocks gegenüber der übrigen Unterseite nach innen zurückzuversetzen, der in Kontakt mit dem Auflager gelangt. Dadurch stehen das Auflager und das damit verbundene untere Ende der jeweiligen Tragstange nicht gegenüber der Unterseite des unteren Füllkörperblocks vor, so dass insbesondere dann, wenn mehrere Teilfestbettkörper zur Bildung des gesamten Festbettkörpers übereinanderliegen, keine Spalträume zwischen den Teilfestbettkörpern entstehen. Es wird dadurch der vom Festbettkörper im Becken ausgefüllte Raum weitestgehend ausgefüllt.

Gemäß einer bevorzugten Ausgestaltung der Erfindung verfügt das Hub- und/oder Tragorgan über Führungsmittel zum Zentrieren des Hub- und/oder Tragorgans gegenüber den sich durch die Füllkörpersäulen erstreckenden Tragstangen. Diese Führungsmittel erleichtern ein Verbinden der oberen freien Enden der Tragstangen mit den einzelnen Balken bzw. Trägern des Trag- und/oder Huborgans, indem beim Aufsetzen des Trag- oder Huborgans auf den Festbettkörper oder den Teilfestbettkörper die freien Enden der Tragstangen in entsprechende Aufnahmen der Träger oder Balken des Trag- und/oder Huborgans eingefädelt werden.

Gemäß einer weiteren Ausgestaltung der Erfindung ist über dem Festbettkörper oder gegebenenfalls über jedem Teilfestbettkörper mindestens ein Niederhalter zur Verhinderung eines Aufschwimmens der Füllkörperblöcke zur Bildung des Festbettkörpers oder Teilfestbettkörpers vorgesehen. Die Niederhalter können durch das Trag- und/oder Huborgan selbst gebildet werden, wenn dieses ständig auf dem Festbettkörper oder Teilfestbettkörper verbleibt. Wird jedoch ein Huborgan für mehrere Teilfestbettkörper eines Beckens oder verschiedener Betten gleichzeitig verwendet, werden separate Niederhalter über dem Festbettkörper oder mindestens den oberen Teilfestbettkörper angeordnet, nachdem das jeweilige Huborgan vom Festbettkörper bzw. Teilfestbettkörper gelöst worden ist. Die Niederhaltermittel dienen dann zur Verhinderung eines Aufschwimmens des Festbettkörpers oder Teile desselben im mit der zu behandelnden Flüssigkeit gefüllten Behälter. Dementsprechend brauchen die Niederhalter keine Tragfunktion auszuüben. Sie brauchen lediglich auf dem Festbettkörper aufzuliegen.

Vorzugsweise sind die Niederhalter, und zwar mindestens Niederhalter für einen oberen Teilfestbettkörper, über dem Pegel der zu behandelnden Flüssigkeit im Behälter angeordnet. Das Volumen der Niederhalter reduziert daher nicht die von diesen auf den Festbettkörper bzw. die Teilfestbettkörper ausgeübte Gewichtsbelastung. Die Niederhalter können dementsprechend leichter ausgebildet sein. Darüber hinaus brauchen die Niederhalter nicht aus einem rostfreien Material gebildet zu sein, wenn sie sich über der zu behandelnden Flüssigkeit im Behälter befinden. Im einfachsten Falle reicht es, die Niederhalter aus Holz, insbesondere Bongossi oder einem anderen schweren Holz zu bilden.

Damit sich die Niederhalter bei vollständig in der zu behandelnden Flüssigkeit eingetauchten Festbettkörper außerhalb der Flüssigkeit befinden, sind die mit Abstand über dem Festbettkörper bzw. den Teilfestbettkörpern angeordnet. Zur Übertragung des Gewichts der Niederhalter auf die Oberseite des Festbettkörpers sind deshalb erfindungsgemäß Distanzhalter vorgesehen, worüber sich die Niederhalter auf der Oberseite des Festbettkörpers bzw. des jeweiligen Teilfestbettkörpers abstützen.

Weitere Unteransprüche betreffen Weiterbildungen der Erfindung.

Bevorzugte Ausführungsbeispiele der Erfindung werden nachfolgend anhand der Zeichnung näher erläutert. In dieser zeigen:
- Fig. 1: einen Vertikalschnitt durch die erfindungsgemäße Vorrichtung, nämlich einen in einem Behälter angeordneten Festkörper,
- Fig. 2: eine Draufsicht auf die Vorrichtung der Fig. 1,
- Fig. 3: eine Draufsicht auf die Vorrichtung analog zur Fig. 2 jedoch ohne ein Huborgan,
- Fig. 4: eine perspektivische Ansicht eines Füllkörperblocks,
- Fig. 5: eine Ansicht unter einen unteren Füllkörperblock,
- Fig. 6: eine vergrößerte Einzelheit VI aus der Fig. 5,
- Fig. 7: einen vertikalen Querschnitt durch die Längsmittelachse einer Tragstange eines unteren Füllkörperblocks gemäß der Einzelheit VII in Fig. 1,
- Fig. 8: eine lösbare Verbindung des Huborgans mit dem Festbett gemäß der Einzelheit VIII in Fig. 1,
- Fig. 9: einen Querschnitt durch einen Niederhalter zur Beschwerung des Festbettkörpers, und
- Fig. 10: einen Teilquerschnitt durch die Vorrichtung nach einem zweiten Ausführungsbeispiel der Erfindung.

Die hier gezeigten Vorrichtungen dienen zur biologischen Behandlung von Fluiden, und zwar insbesondere zur biologischen Reinigung von Abwasser. Das Abwasser wird in einem Festbettkörper biologisch gereinigt. Der Festbettkörper bildet eine Bewuchsfläche für ein sogenannten biologischen Rasen, der mit dem zu reinigenden Abwasser oder einer anderen Flüssigkeit, und zwar auch einem Gas in Kontakt gebracht wird.

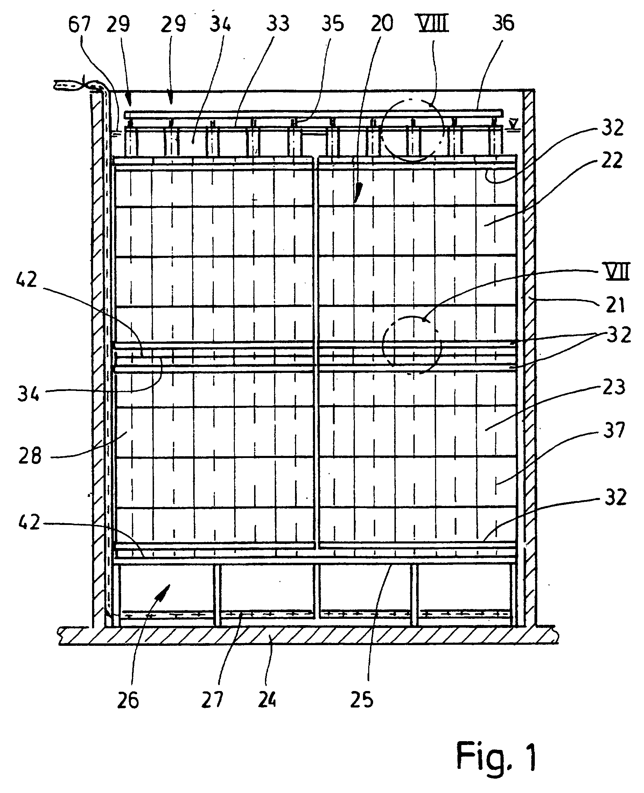

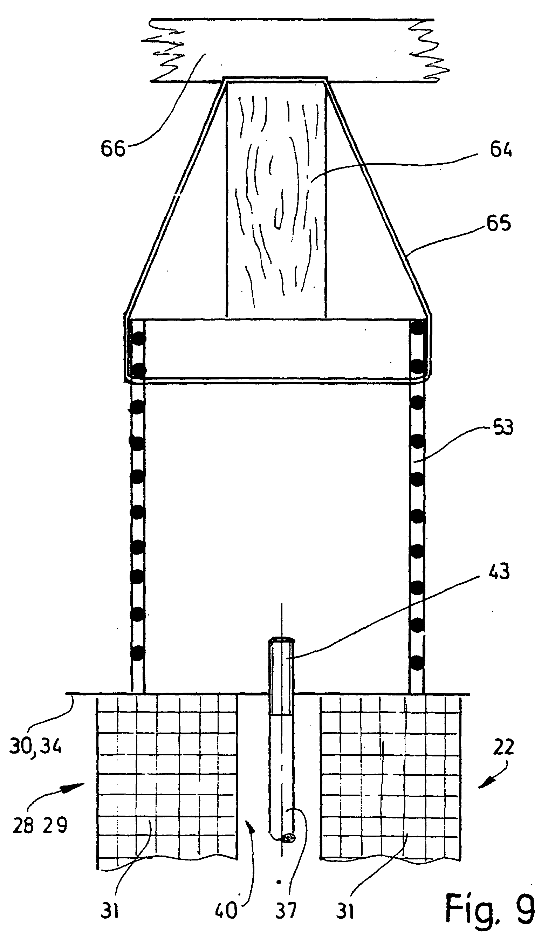

Die Fig. 1 bis 9 zeigen eine Vorrichtung zur biologischen Behandlung von insbesondere Abwasser nach einem ersten Ausführungsbeispiel der Erfindung. Hier ist in einem kubischen Behälter 21 mit einer vorzugsweise rechteckigen Grundfläche ein Festbettkörper 20 angeordnet. Im gezeigten Ausführungsbeispiel ist der Festbettkörper 20 aus zwei etwa gleich großen, übereinandergestapelten Teilfestbettkörpern 22 und 23 gebildet. Alternativ kann der Festbettkörper 20 auch einstückig sein oder sich aus mehr als zwei Teilfestbettkörpern sich zusammensetzen.

Im gezeigten Ausführungsbeispiel befindet sich auf einer horizontalen Bodenplatte des Behälters 21 ein Auflager 25, das nach Art eines dreidimensionalen Tragwerks ausgebildet ist. Auf dem Auflager 25 liegt der Festbettkörper 20, und zwar hier der unter Teilfestbettkörper 23, mit seiner Unterseite auf. Durch das Auflager 25 wird zwischen der Unterseite des Festbettkörpers 20 und der Bodenplatte 24 des Behälters 21 ein Freiraum 26 geschaffen, in dem eine Belüftungseinrichtung 27 angeordnet ist. Die Belüftungseinrichtung 27 ist in an sich bekannter Weise ausgebildet, so dass hierauf hier nicht näher eingegangen wird.

Der quaderförmige Festbettkörper 20 ist gebildet aus einer Vielzahl untereinander gleicher Füllkörperblöcke 28. Die Füllkörperblöcke 28 sind zur Bildung des Festbettkörpers 20 neben- und übereinandergestapelt. Die Fig. 1 zeigt, dass zur Bildung jedes Teilfestbettkörpers 22 und 23 des Festbettkörpers 20 fünf Füllkörperblöcke 28 übereinandergestapelt sind. Jeweils fünf dieser übereinandergestapelten Füllkörperblöcke 28 bilden eine vertikale Füllkörpersäule 29. Solche Füllkörpersäulen 29 sind in Längsrichtung und in Querrichtung des Behälters 21 nebeneinanderliegend angeordnet. Im hier gezeigten Ausführungsbeispiel sind in Längsrichtung des Behälters 21 10 Füllkörpersäulen 29 nebeneinander angeordnet. In Querrichtung des Behälters 21 befinden sich fünf Füllkörpersäulen 29 nebeneinander. Die Anzahl der in Längs- und Querrichtung des Behälters 21 nebeneinander angeordneten Füllkörpersäulen 29 sowie die Anzahl der zu jeder Füllkörpersäule 29 übereinandergestapelten Füllkörperblöcke 28 kann vom hier gezeigten Ausführungsbeispiel 1 abweichen. Die Anzahl 1 der Füllkörperblöcke 28 zur Bildung des jeweiligen Festbettkörpers 20 kann beliebig variieren. Sie hängt in erster Linie von der Größe des Behälters 21 ab. Üblicherweise wird der Festbettkörper 20 aus einer solchen Anzahl 1 von Füllkörperblöcken 28 gebildet, das durch den Festbettkörper 20 bzw. die übereinander und gegebenenfalls auch nebeneinander angeordneten Teilfestbettkörper 22 und 23 der Behälter 21 abgesehen vom Freiraum 26 möglichst vollständig ausgefüllt ist.

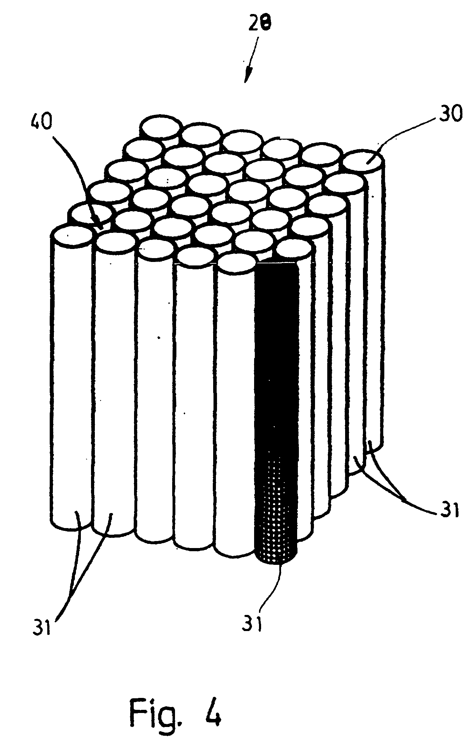

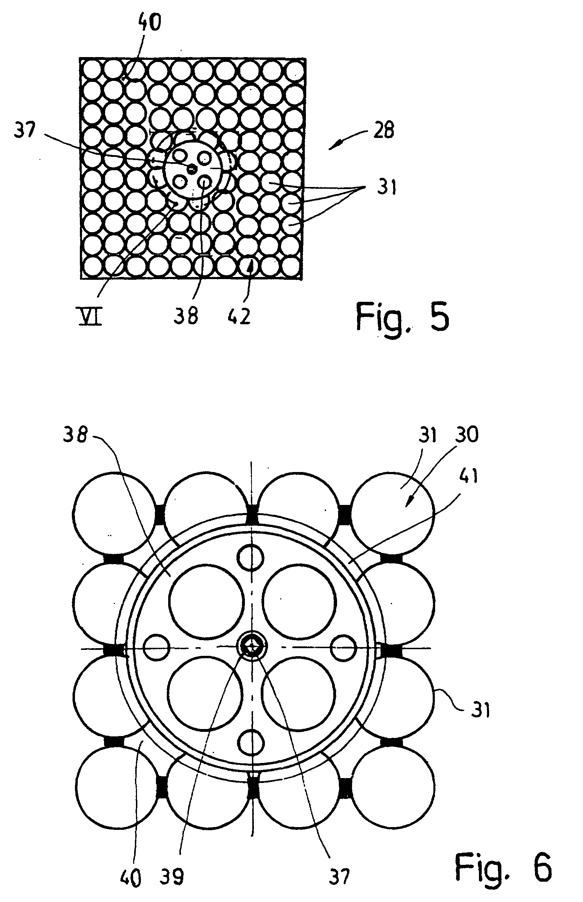

Insbesondere die Fig. 4 und 5 zeigen den Aufbau eines der untereinander gleich ausgebildeten Füllkörperblöcke 28. Demnach ist jeder würfelförmige Füllkörperblock 28 gebildet aus einer Vielzahl neben- und hintereinander angeordneter senkrechter Rohrabschnitte. Die gleichen Rohrabschnitte verfügen über eine netzartige Mantelfläche mit gegenüberliegenden, offenen Stirnseiten 30. Bei den Rohrabschnitten handelt es sich somit um Netzrohre 31. Die Netzrohre 31 sind aus Kunststoff gebildet, und zwar vorzugsweise ungeschäumten thermoplastischen Kunststoff. Gegebenenfalls können die Netzrohre 31 auch aus geschäumtem thermoplastischen Kunststoff hergestellt sein.

Die senkrecht gerichteten Netzrohre 31 sind reihen- und zeilenweise nebeneinanderliegend angeordnet, derart, dass benachbarte Netzrohre 31 mit ihren äußeren Mantelflächen an senkrechten Berührungslinien miteinander in Kontakt stehen, nämlich aneinander anliegen. Die Netzrohre 31 sind zur Bildung des jeweiligen einstückigen Füllkörperblocks 28 in an sich bekannter Weise miteinander verbunden, und zwar vorzugsweise im Bereich ihrer offenen Stirnseiten 30 und/oder an ihren senkrechten Berührungslinien. Diese Verbindung kann durch Schweißen oder dergleichen erfolgen.

Beim eingebauten Festbettkörper 20 sind die Füllkörperblöcke 28 allesamt derart orientiert, dass ihre Netzrohre 31 bezüglich ihrer Längserstreckungsrichtung senkrecht verlaufen. Des weiteren sind die Füllkörperblöcke 28 so übereinandergestapelt, dass die senkrechten Netzrohre 31 übereinander- bzw. untereinanderliegender Füllkörperblöcke 28 unmittelbar übereinanderliegen. Die Stirnseiten 30 der Netzrohre 31 übereinanderliegender Füllkörperblöcke 28 fluchten dadurch miteinander, wodurch über die gesamte Höhe des Festbettkörpers 20 bzw. des jeweiligen Teilfestbettkörpers 22, 23 durchgehende Netzrohrsäulen aus den Netzrohre 31 der übereinandergestapelten Füllkörperblöcke 28 gebildet werden.

Zumindest die übereinanderliegenden Füllkörperblöcke 28 des Festbettkörpers 20 oder jedes Teilfestbettkörpers 22, 23 können vorzugsweise formschlüssig miteinander verbunden sein, wie es beispielsweise aus der DE 94 20 207 U bekannt ist. Die Füllkörpersäulen 29 und Füllkörperblöcke 28 sind im gezeigten Ausführungsbeispiel bei jedem Teilfestbettkörper 22, 23 durch Bandagen 32 aus insbesondere dünnen Blechstreifen aus rostfreiem Stahl oder Kunststoff zusammengehalten (Fig. 1)

Bei der in den Fig. 1 bis 9 gezeigten Vorrichtung sind Teile des Festbettkörpers 20, nämlich die Teilfestbettkörper 22, 23, an ein Huborgan ankuppelbar. Dadurch befindet sich jeweils ein Teilfestbettkörper 22, 23 hängend unter dem Huborgan. Die Teilfestbettkörper 22, 23 sind nacheinander durch das Huborgan aus dem Behälter 21 aushebbar. Ebenso werden die Teilfestbettkörper 22, 23 nacheinander vom Huborgan in den Behälter 21 eingesetzt.

Die Fig. 1 zeigt das mit dem zuerst aus dem Behälter 21, auszubauenden (oberen) Teilfestbettkörper 22 verbundene Huborgan. Dieses Huborgan ist hier als ein Hubrahmen 33 ausgebildet. Der in einer horizontalen Ebene mit Abstand über der Oberseite 34 des oberen Teilfestbettkörpers 22 angeordnete Hubrahmen 33 ist nach Art eines zweidimensionalen Rahmentragwerks aufgebaut. Der Hubrahmen 33 setzt sich zusammen aus mit Abstand parallel zueinander verlaufend angeordneten Querträgern 35 und diese verbindende Längsträger 36. Die Querträger 35 und die Längsträger 36 sind im gezeigten Ausführungsbeispiel aus Vierkant-Stahlrohren mit entsprechendem Querschnitt gebildet.

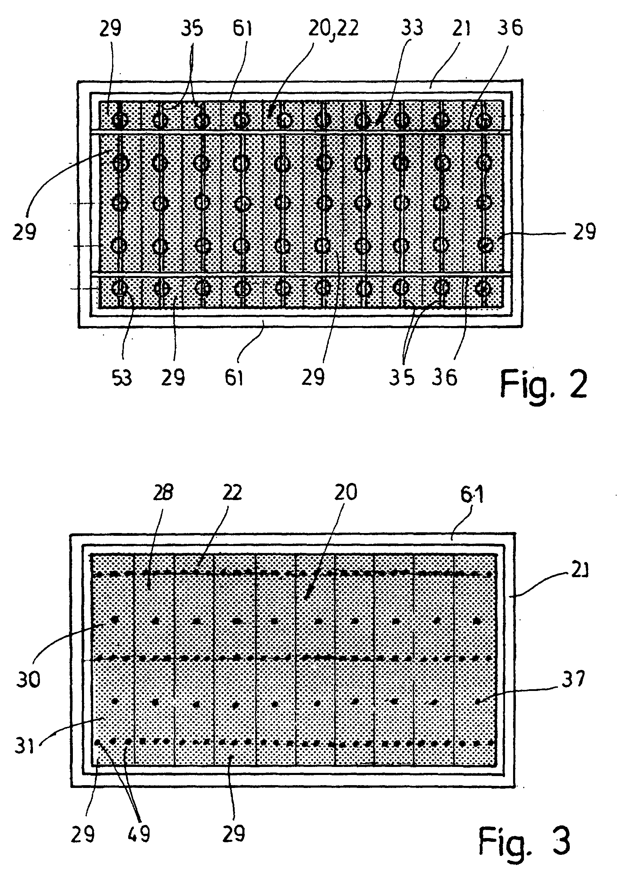

Die Querträger 35 erstrecken sich quer durch den gesamten Behälter 21 und somit über den gesamten Festbettkörper 20 bzw. Teilfestbettkörper 22. An jeweils einem Querträger 35 sind alle (im gezeigten Ausführungsbeispiel fünf) Füllkörpersäulen 29 angehängt, die in Querrichtung des Behälters 21 nebeneinandergestapelt sind. Jeder sich in Längsrichtung des Behälters 21 anschließenden quergerichteten Reihe aus fünf Füllkörpersäulen 29 ist ein weiterer Querträger 35 zugeordnet. Der Hubrahmen 33 der gezeigten Vorrichtung verfügt demzufolge über zehn gleich ausgebildete Querträger 35. Über alle Querträger 35 hinweg erstrecken sich im gezeigten Ausführungsbeispiel die beiden parallelen Längsträger 36. Die Längsträger 36 sind mit geringem Abstand von den gegenüberliegenden Enden der Querträger 35 angeordnet (Fig. 2). Jeder Längsträger 36 ist mit den Querträgern 35 an den Kreuzungsstellungen fest verbunden, wodurch der Hubrahmen 33 seine entsprechende Gestalt erhält.

Jede Füllkörpersäule 29 ist durch ein sich etwa mittig in vertikaler Richtung durch die betreffende Füllkörpersäule 29 erstreckendes Zugorgan an den betreffenden Querträger 35 des Hubrahmens 33 angehängt. Beim Zugorgan handelt es sich im hier gezeigten Ausführungsbeispiel um eine Tragstange 37, die durch einen mittigen Zwischenraum, nämlich Zwickel 40, zwischen vier im mittigen Bereich des jeweiligen Füllkörperblocks 28 angeordneten Netzrohren 31 hindurchgesteckt ist (Fig. 5).

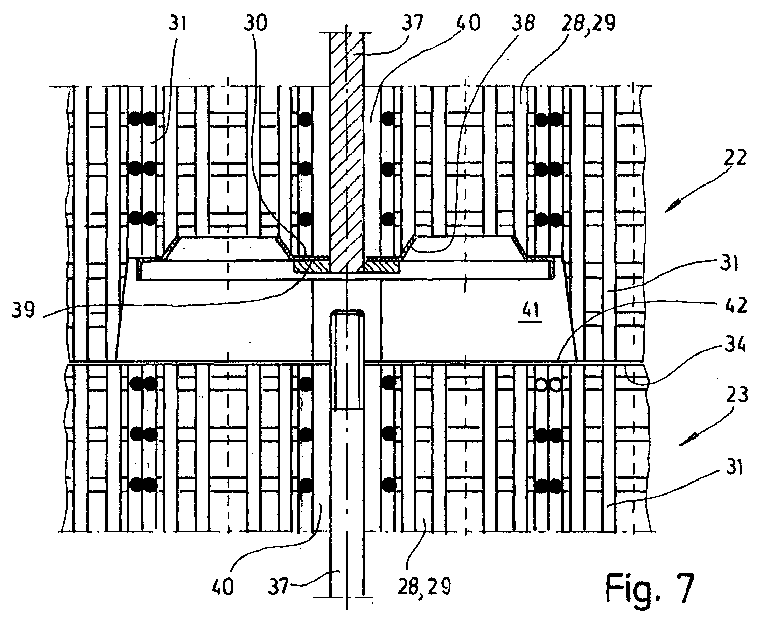

Einem unteren Ende jeder Tragstange 37 ist ein Auflager zugeordnet. Es handelt sich hierbei um einen zylindrischen Auflagerteller 38, der über eine mittige Bohrung auf das untere Ende der Tragstange 37 aufgeschoben und hierauf durch einen an das untere Ende der Tragstange 37 angeschweißten (oder auch angeschraubten) Stützring 39 gehalten ist (Fig. 7). Der Auflagerteller 38 ist in an sich bekannter Weise ausgebildet, und zwar wie es beispielsweise aus der EP 0 933 335 A1 bekannt ist. Demnach liegt der Auflageteller 38 vollständig unter vier Netzrohren 31 an, die den Zwickel 40, durch den die Tragstange 37 geführt ist, umgeben bzw. begrenzen. Darüber hinaus liegen äußere Randbereiche des Auflagertellers 38 teilweise an benachbarten Netzrohren 31 an (Fig. 6).

Im Bereich des Auflagertellers 38 sind die Netzrohre 31 gekürzt. Stirnseiten 30 der gekürzten Netzrohre 31 sind demnach gegenüber der Unterseite 42 des unteren Füllkörperblocks 28 jeder Füllkörpersäule 29 zurückversetzt ins Innere des Füllkörperblocks 28. Dadurch wird ein Aufnahmeraum 41 für den Auflagerteller 38 und das Ende der Tragstange 37 mit dem Stützring 39 unter den unteren Füllkörperblöcken 28 des oberen Teilfestbettkörpers 22 geschaffen. Dadurch kann der obere Teilfestbettkörper 22 mit seiner Unterseite 42 auf der Oberseite 34 des unteren Teilfestbettkörpers 23 aufgesetzt werden, wobei durch die Unterbringung des Auflagetellers 38 und des unteren Endes der Tragstange 37 mit dem Stützring 39 in den Aufnahmeräumen 41 an der Unterseite 42 des oberen Teilfestbettkörpers 22 beide Teilfestbettkörper 22 und 23 unmittelbar aufeinander zur Anlage gebracht werden können (Fig. 1). In gleicher Weise können die Tragstangen 37 mit Auflagerteller 38 unter dem unteren Teilfestbettkörper 23 befestigt werden, wodurch die Unterseite 42 des unteren Teilfestbettkörpers 23 unmittelbar auf dem Auflager 25 aufliegen kann (Fig. 1).

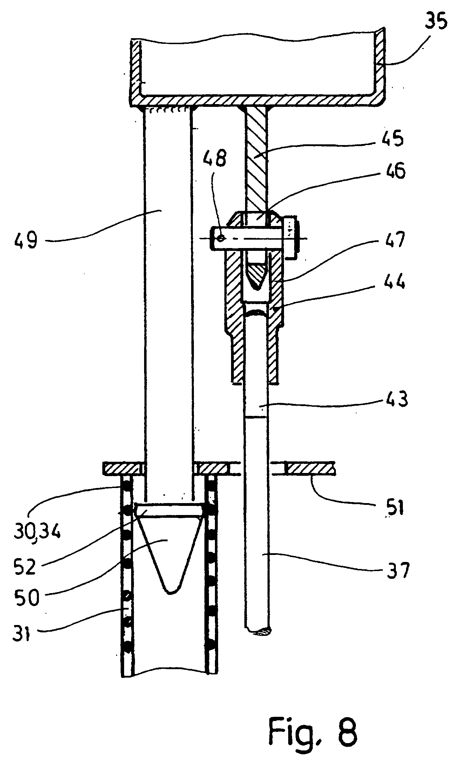

Ein oberes Ende jeder Tragstangen 37 ist oben aus jeder Füllkörpersäule 29 sowohl des Teilfestbettkörpers 22 als auch des Teilfestbettkörpers 23 herausgeführt. Dabei ragt jeweils eine Tragstange 37 mit einem oberen Endbereich nach oben aus jeder Füllkörpersäule 29 hinaus (Fig. 8). Das freie obere Ende jeder Tragstange 37 ist mit einem Außengewinde 43 versehen, auf das ein Gabelkopf 44 aufschraubbar ist. Mit dem Gabelkopf 44 ist jede Tragstange 37 mit dem betreffenden Querträger 35 des Hubrahmens 33 verbindbar. Dazu verläuft durchgehend unter jedem Querträger 35 ein vertikal gerichteter Verbindungssteg 45, der vorzugsweise mittig mit einer unteren Horizontalwandung des betreffenden Querträgers 35 verschweißt ist. Der Verbindungssteg 45 ist mit einer Reihe von Durchgangsbohrungen 46 versehen. Der Verbindungssteg 45 des betreffenden Querträgers 35 ragt von oben in einer Gabelende 47 des jeweiligen Gabelkopfs 44 hinein. Die Gabelköpfe 44 der Tragstangen 37 aller in Querrichtung des Behälters 21 aufeinanderfolgenden Füllkörpersäulen 29 sind mit dem Verbindungssteg 45 durch Sicherungsbolzen 48 lösbar verbunden. Dazu ist jeweils ein Sicherungsbolzen 48 quergerichtet durch entsprechende Bohrungen im Gabelende 47 des Gabelkopfs 44 und eine passende Durchgangsbohrung 46 am unteren Ende des Verbindungsstegs 45 unter dem Querträger 35 hindurchsteckbar (Fig. 8).

Der Hubrahmen 33 ist mit nach unten vorstehenden Führungen versehen, bei denen es sich im gezeigten Ausführungsbeispiel um Führungsrohre 49 handelt. Die Führungsrohre 49 sind paarweise auf gegenüberliegenden Seiten des Verbindungsstegs 45 angeordnet, und zwar so, dass jeder zweiten Füllkörpersäule 29 zwei Führungsrohre 49 auf gegenüberliegenden Seiten des Verbindungsstegs 45 zugeordnet sind (Fig. 3). Die Anzahl und Anordnung der Führungsrohre 49 kann in beliebiger Weise von der gezeigten Anordnung abweichen.

Die senkrecht gegenüber der Unterseite jedes Querträgers 35 nach unten weisenden Führungsrohre 49 sind um ein Mehrfaches länger als der Verbindungssteg 45 ausgebildet. Die Enden der Führungsrohre 49 sind mit kegligen Spitzen 50 versehen. Die Führungsrohre 49 und insbesondere die Spitzen 50 sind so ausgebildet, dass jedes Führungsrohr 49 mit eine unteren Endbereich durch die obere Stirnseite 30 in ein Netzrohre 31 der entsprechenden Füllkörpersäule 29 mit geringfügigem Spiel eingeschoben werden kann. Dabei kommt es zu einer Zentrierung des Hubrahmens 33 gegenüber der Oberseite des Festbettkörpers 20, insbesondere des jeweiligen Teilfestbettkörpers 22 bzw. 23. Diese Zentrierung sorgt dafür, dass beim Absenken des Hubrahmens 33 auf den Festbettkörper 20 die Verbindungsstege 45 unter den Querträgern 35 in die Schlitze der Gabelenden 47 der Gabelköpfe 44 eintreten. Dadurch brauchen zur Verbindung des jeweiligen Teilfestbettkörpers 22 bzw. 23 mit dem Hubrahmen 33 nur noch die Sicherungsbolzen 48 durch die Gabelenden 47 und die Durchgangsbohrungen 46 in den Verbindungsstegen 45 hindurchgesteckt zu werden.

Im gezeigten Ausführungsbeispiel ist zumindest jedes der auf gegenüberliegenden Seiten des Verbindungsstegs 45 angeordneten Paare von Führungsrohren 49 miteinander durch eine Zentrierplatte 51 verbunden. Die Zentrierplatte 51 ist mit geringfügigem Spiel auf den gegenüberliegenden Führungsrohren 49 und der dazwischen angeordneten Tragstange 37 vertikal 1 verschiebbar. Dabei ist das Spiel zwischen der Zentrierplatte 51 und der jeweiligen Tragstange 37 deutlich größer als das Spiel zwischen der Zentrierplatte 51 und den Führungsrohre 49 (Fig. 8). Die Zentrierplatte 51 ist gegen Herunterrutschen von den Führungsrohren 49 gesichert durch einen ringförmigen Anschlag im unteren Endbereich des jeweiligen Führungsrohrs 49. Dieser Anschlag 52 ist im gezeigten Ausführungsbeispiel gebildet durch ein gegenüber dem Durchmesser des Führungsrohrs 49 größeren Durchmesser des oberen Endbereichs der Spitze 50 unter jedem Führungsrohr 49 (Fig. 8).

Durch die verschiebliche Lagerung der Zentrierplatte 51 auf den Führungsrohren 49 kommt die Zentrierplatte 51 beim Absenken des Hubrahmens 33 auf die Teilfestbettkörper 22, 23 zur Anlage und bleibt hierauf liegen, wenn der Hubrahmen 33 weiter abgesenkt wird, wobei die Führungsrohre 49 ungehindert in die entsprechenden Netzrohre 31 eintauchen können.

Nach dem Verbinden des Hubrahmens 33 mit dem oberen Teilfestbettkörper 22 ist der gesamte Teilfestbettkörper 22 im unter dem Hubrahmen 33 hängenden Zustand aus dem Behälter 21 aushebbar. Nachdem der obere Teilfestbettkörper 22 vom Hubrahmen 33 aus dem Behälter 21 entfernt worden ist, kann entweder durch einen zweiten Hubrahmen 33 oder den gleichen Hubrahmen 33, nachdem dieser vom Teilfestbettköper 22 gelöst worden ist, der untere Teilfestbettkörper 23 aus dem Behälter 21 herausgehoben werden. Dazu wird in gleicher Weise wie beim oberen Teilfestbettkörper 22 der untere Teilfestbettkörper 23 mit dem Hubrahmen 33 verbunden und anschließend unter dem Hubrahmen 33 hängend aus dem Behälter 21 entfernt. In umgekehrter Reihenfolge erfolgt ein Einsetzen der Teilfestbettkörper 23 und 22 in den Behälter 21.

Nach dem Einsetzen beider Teilfestbettkörper 22 und 23 in den Behälter 21 kann der Hubrahmen 33 mit dem oberen Teilfestbettkörper 22 verbunden bleiben. In diesem Falle werden zwischen dem Hubrahmen 33 und der Oberseite 34 des oberen Teilfestbettkörpers 22 Abstandshalter angeordnet. Im gezeigten Ausführungsbeispiel werden die Abstandshalter gebildet aus kurzen Netzrohrabschnitten 53. Die Netzrohrabschnitte 53 weisen einen Durchmesser auf, der deutlich größer als der Durchmesser der Netzrohre 31 zur Bildung der Füllkörperblöcke 28 ist. Die Netzrohrabschnitte 53 umgeben mindestens einige der Tragstangen 37. Vorzugsweise ist jeder Tragstange 37 ein Netzrohrabschnitt 53 zugeordnet, so dass zwischen der Oberseite 34 jeder Füllkörpersäule 29 und dem darüber angeordneten Querträger 35 des Hubrahmens 33 ein Netzrohrabschnitt 53 angeordnet ist (Fig. 1 und 2). Dadurch stützt sich der Hubrahmen 33 mit den Querträgern 35 auf den jeweiligen Füllkörpersäulen 29 ab. Diese Abstützung hat zur Folge, dass der Hubrahmen 33 zur Gewichtsbelastung des Festbettkörpers 20, nämlich der Teilfestbettkörper 22 und 23, dient. Dadurch wird ein Aufschwimmen der Teilfestbettkörper 22 und 23 im Behälter 21 verhindert. Die Höhe der Netzrohrabschnitte 53 ist so gewählt, dass bei vollständig in der zu behandelnden Flüssigkeit im Behälter 21 eingetauchten Festbettkörper 20 der Hubrahmen 23 sich außerhalb, nämlich oberhalb der Flüssigkeit im Behälter 21 befindet. Der Hubrahmen 33 braucht dadurch nicht rostfrei ausgebildet zu sein. Außerdem wirkt der Hubrahmen 33 mit seinem gesamten Gewicht als Niederhalter für den Festbettkörper 20. Die durch die Netzrohrabschnitte 53 beabstandete Anordnung des Hubrahmens 33 über dem Festbettkörper 20 führt außerdem zu einer freien Durchströmbarkeit der offenen Stirnseiten 30 der Netzrohre 31 der Füllkörperblöcke 28 mit der zu behandelnden Flüssigkeit, insbesondere Abwasser. Das kann noch dadurch begünstigt werden, dass nur einigen ausgewählten Füllkörpersäulen 29 als Abstandshalter dienende Netzrohrabschnitte 53 zugeordnet werden.

Wird nach dem Einsetzen des oberen Teilfestbettkörpers 22 in den Behälter 21 der Hubrahmen 23 entfernt, um diesen beispielsweise woanders zu verwenden, werden die Teilfestbettkörper 22 und 23 beschwert durch separate Niederhalterbalken 64. Bei Verwendung dieser Niederhalterbalken 64 zur Beschwerung des Festbettkörpers 20 verbleiben die Netzrohrabschnitte 53 auf der Oberseite 34 des oberen Teilfestbettkörpers 22. Auf einer Reihe von Netzrohrabschnitten 53 wird dann vorzugsweise hochkant jeweils ein Niederhalterbalken 64 angeordnet und durch Haltegurte 65 oder dergleichen mit den Netzrohrabschnitten 53 verbunden. Die Niederhalterbalken 64 können so bemessen angeordnet sein wie die Querträger 35 des Hubrahmens 33. Die Niederhalterbalken 64 können auch durch Längsträger 66 miteinander verbunden sein (Fig. 2). Die Niederhalterbalken 64 und die Längsträger 66 sind vorzugsweise aus schwerem Holz, beispielsweise Bongossi, gebildet. Es ist aber auch denkbar, die Niederhalterbalken 64 und/oder die Längsträger 66 aus einem anderen, schweren Material zu bilden, was es nicht rostfrei sein muss, weil die Niederhalterbalken 64 und auch die Längsträger 66 über dem Pegel 67 der Flüssigkeit im Behälter 21 angeordnet sind (Fig. 1).

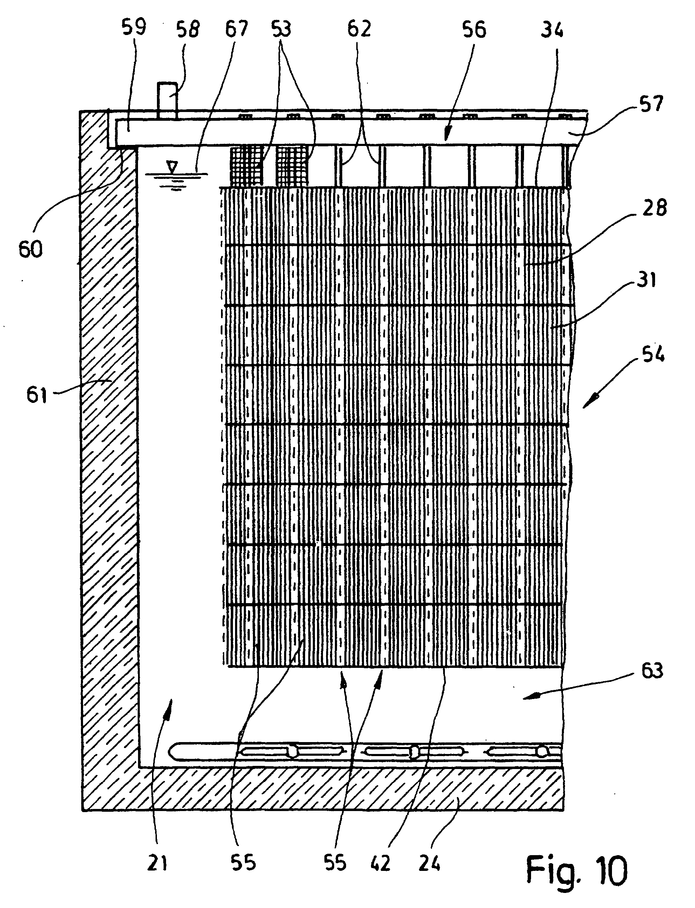

Die Fig. 10 zeigt eine Vorrichtung nach einem zweiten Ausführungsbeispiel der Erfindung. Hier ist ein einteiliger Festbettkörper 54 vollständig hängend im Behälter 21 angeordnet. Der Festbettkörper 54 ist wie der Festbettkörper 20 des vorstehend beschriebenen Ausführungsbeispiels bzw. wie die Teilfestbettkörper 22, 23 dieses Ausführungsbeispiels aufgebaut, setzt sich nämlich aus vielen zusammengesetzten Füllkörperblöcken 28 zusammen, wobei eine Füllkörpersäule 55 in diesem Ausführungsbeispiel über acht übereinandergestapelte Füllkörperblöcke 28 verfügt.

Der Festbettkörper 54 hängt unter einem Tragorgan, das hier als ein zweidimensionales Rahmentragwerk in Gestalt eines Tragrahmens 56 ausgebildet ist. Der Tragrahmen 56 kann ähnlich wie der Hubrahmen 33 ausgebildet sein. Demnach setzt sich der Tragrahmen 56 zusammen aus Querträgern 57 und diese verbindende Längsträger 58. Die Querträger 57 liegen mit gegenüberliegenden Endbereichen 59 auf Auflagern 60 der (längeren) Längsseitenwände 61 des Behälters 21 auf. Dadurch halten die Querträger 57 den Festbettkörper 54 hängend im Behälter 21. Die Längsträger 58 haben im gezeigten Ausführungsbeispiel keine tragende Funktion; sie dienen nur als Abstandshalter zwischen den Querträgern 57 und können gegebenenfalls auch entfallen.

Jede Füllkörpersäule 55 des Festbettkörpers 54 ist durch mittige, senkrechte Tragstangen 62 mit den Querträgern 57 des Tragrahmens 56 verbunden. Diese Verbindung braucht nicht lösbar zu sein, weil der Tragrahmen 56 ständig über dem Festbettkörper 54 verbleibt, um diesen Behälter 21 zu halten.

Durch die hängende Anordnung des Festbettkörpers 54 am Tragrahmen 56 im Behälter 21 braucht unter dem Festbettkörper 54 kein Auflager 25 vorhanden zu sein, wie es beim Ausführungsbeispiel der Fig. 1 bis 9 erforderlich ist. Ein Freiraum 63 unter dem Festbettkörper 54 wird gebildet durch eine entsprechend Positionierung der Auflager 60 des Tragrahmens 56 auf den Längsseitenwänden 61 des Behälters 21. Dadurch ist die Belüftungseinrichtung 27 im Freiraum 63 unter dem Festbettkörper 54 frei zugänglich, wodurch insbesondere auch eine vollständige Durchströmung des Festbettkörpers 54 gewährleistet ist.

Die Höhe des Freiraums 63 kann variiert werden durch eine Veränderung des Abstands des Festbettkörpers 54 zum Tragrahmen 56 einerseits und eine Höhenveränderung der Auflager 60 andererseits, indem beispielsweise zwischen den Auflagern 60 und den gegenüberliegenden Endbereichen der Querträger 57 des Tragrahmens 56 Abstandshalter wie zum Beispiel längliche Balken angeordnet werden.

Des weiteren ermöglicht die Aufhängung des Festbettkörpers 54 im Behälter 21 eine seitliche Verschiebung des gesamten Festbettkörpers 54 oder nur Teile desselben, indem die Position der Querträger 57 auf den Auflagern 60 verändert wird. In diesem Falle müssen die Längsträger 58 lösbar bzw. verschieblich mit den Querträgern 57 verbunden sein. Gegebenenfalls können aber auch die Längsträger 58 ganz entfallen. Dann können die Querträger 57 nahezu beliebig verschoben werden und dadurch der Festbettkörper 54 oder Teile desselben bedarfsgerecht im Behälter 21 positioniert werden.

Es ist auch denkbar, einen aus zwei Teilfestbettkörpern 22 und 23 oder auch mehreren Teilfestbettkörpern gebildeten Festbettkörper 20 hängend im Behälter 21 anzuordnen. Ist - - wie beim ersten Ausführungsbeispiel der Erfindung - der Festbettkörper 20 aus zwei übereinander angeordneten Teilfestbettkörpern 22 und 23 gebildet, wird nicht nur der obere Teilfestbettkörper 22, sondern auch der untere Teilfestbettkörper 23 mit jeweils einem eigenen Tragrahmen 56 im Behälter 21 aufgehängt. Der Behälter 21 muss dann für beide Tragrahmen geeignete Auflager aufweisen. Damit beide Teilfestbettkörper 22 und 23 frei unter dem jeweiligen Tragrahmen 56 herunterhängen können, ist zwischen den beiden Teilfestbettkörpern 22 und 23 ein geringfügiger Spalt vorzusehen, der einerseits den unteren Tragrahmen für den unteren Teilfestbettkörper 23 aufnimmt und andererseits sicherstellt, dass die Unterseite des oberen Teilfestbettkörpers 22 nicht auf dem Tragrahmen für den unteren Teilfestbettkörper 23 aufliegt.

### Bezugszeichenliste:

- 20: Festbettkörper
- 21: Behälter
- 22: Teilfestbettkörper
- 23: Teilfestbettkörper
- 24: Bodenplatte
- 25: Auflager
- 26: Freiraum
- 27: Belüftungseinrichtung
- 28: Füllkörperblock
- 29: Füllkörpersäule
- 30: Stirnseite
- 31: Netzrohr
- 32: Bandage
- 33: Hubrahmen
- 34: Oberseite
- 35: Querträger
- 36: Längsträger
- 37: Tragstange
- 38: Auflagerteller
- 39: Stützring
- 40: Zwickel
- 41: Aufnahmeraum
- 42: Unterseite
- 43: Außengewinde
- 44: Gabelkopf
- 45: Verbindungssteg
- 46: Durchgangsbohrung
- 47: Gabelende
- 48: Sicherungsbolzen
- 49: Führungsrohr
- 50: Spitze
- 51: Zentrierplatte
- 52: Anschlag
- 53: Netzrohrabschnitt
- 54: Festbettkörper
- 55: Füllkörpersäule
- 56: Tragrahmen
- 57: Querträger
- 58: Längsträger
- 59: Endbereich
- 60: Auflager
- 61: Längsseitenwand
- 62: Tragstange
- 63: Freiraum
- 64: Niederhalterbalken
- 65: Haltegurt
- 66: Längsträger
- 67: Pegel

## Patentansprüche

1. Vorrichtung zur biologischen Behandlung von Fluiden, mit mindestens einem in einem Behälter angeordneten Festbettkörper, der aus einer Vielzahl von Füllkörperblöcken aus miteinander verbundenen Netzrohren (31) zusammengesetzt ist, **dadurch gekennzeichnet, dass** wenigstens ein Teil des Festbettkörpers (20, 54) an einem Tragorgan hängend im Behälter (21) angeordnet ist.

2. Vorrichtung nach Anspruch 1, **dadurch gekennzeichnet, dass** das Tragorgan gleichzeitig als Huborgan dient, womit der hängende Festbettkörper (20, 54) in den Behälter (21) einsetzbar bzw. aus dem Behälter (21) heraushebbar ist.

3. Vorrichtung nach Anspruch 1 oder 2, **dadurch gekennzeichnet, dass** der Festbettkörper (20, 54) oder ein Teil desselben lösbar mit dem Huborgan und/oder dem Tragorgan verbindbar ist.

4. Vorrichtung nach einem der vorhergehenden Ansprüche, **dadurch gekennzeichnet, dass** der Festbettkörper (20) aus mehreren Teilfestbettkörpern (22, 23) gebildet ist, die aus in Längs- und Querrichtung des Behälters (21) nebeneinander angeordneten Füllkörpersäulen (29, 55) aus jeweils mehreren übereinander angeordneten Füllkörperblöcken (28) gebildet sind.

5. Vorrichtung nach einem der vorhergehenden Ansprüche, **dadurch gekennzeichnet, dass** sich durch jede Füllkörpersäule (29, 55) ein Zugstrang erstreckt, dessen oberes Ende lösbar mit dem Tragorgan und/oder Huborgan verbunden ist.

6. Vorrichtung nach einem der vorhergehenden Ansprüche, **dadurch gekennzeichnet, dass** das Tragorgan und/oder das Huborgan als ein zweidimensionales Rahmentragwerk ausgebildet ist, das mit Abstand parallel zueinander verlaufende Querträger (35, 57) und diese verbindende Längsträger (36, 58) aufweist.

7. Vorrichtung nach einem der vorhergehenden Ansprüche, **dadurch gekennzeichnet, dass** an jedem Querträger (35, 57) alle Füllkörpersäulen (29, 55) einer Reihe angehängt sind.

8. Vorrichtung nach einem der vorhergehenden Ansprüche, **dadurch gekennzeichnet, dass** die durch jede Füllkörpersäule (29, 55) verlaufenden Zugstränge als Tragstangen (37, 62) ausgebildet sind, die am unteren Ende ein Auflager für die Unterseite des untersten Füllkörperblocks (28) jeder Füllkörpersäule (29, 55) aufweisen.

9. Vorrichtung nach Anspruch 8, **dadurch gekennzeichnet, dass** das jeweilige Auflager als ein mit dem unteren Ende jeder Tragstange (37, 62) verbundener Auflagerteller (38) ausgebildet ist, der sich unter den Stirnseiten von vorzugsweise mindestens vier benachbarten (mittigen) Netzrohren (31) zur Bildung eines Teils jedes Füllkörperblocks (28) abstützt.

10. Vorrichtung nach einem der vorhergehenden Ansprüche, **dadurch gekennzeichnet, dass** diejenigen Netzrohre (31) unter dessen Stirnseiten (30) der jeweilige Auflagerteller (38) ganz oder teilweise anliegt, gegenüber den Stirnseiten (30) der übrigen äußeren Netzrohre (31) zurückversetzt sind.

11. Vorrichtung nach einem der vorhergehenden Ansprüche, **dadurch gekennzeichnet, dass** das Huborgan (33) Führungsmittel zum Zentrieren desselben gegenüber den Tragstangen (37) vor dem Verbinden derselben mit dem Huborgan aufweist, die gegenüber wenigstens einem Querträger (35) des Huborgans nach unten vorstehende Führungsrohre (49) ausgebildet sind, die in offene obere Stirnseiten (30) von mindestens einem Netzrohr (31) wenigstens einige Füllkörpersäulen (29) eingreifen.

12. Vorrichtung nach einem der vorhergehenden Ansprüche, **dadurch gekennzeichnet, dass** die Führungsrohre (49) durch horizontal gerichtete Abstandshalter (51) fixiert sind.

13. Vorrichtung nach einem der vorhergehenden Ansprüche, **dadurch gekennzeichnet, dass** über dem Festbettkörper (20, 54) bzw. über den Teilfestbettkörpern (22, 23), Niederhalter (64) zur Auftriebsverhinderung angeordnet sind, die mit ihrem Eigengewicht auf dem Festbettkörper (20, 54) bzw. dem jeweiligen Teilfestbettkörper (22, 23) ruhen.

14. Vorrichtung nach einem der vorhergehenden Ansprüche, **dadurch gekennzeichnet, dass** die Niederhalter mit Abstand über dem Festbettkörper (20, 54) bzw. den Teilfestbettkörpern (22, 23) angeordnet sind und sich vorzugsweise über Distanzhalter auf dem Festbettkörper (20, 54) bzw. dem oberen Teilfestbettkörper (22) abstützen.

15. Vorrichtung nach einem der vorhergehenden Ansprüche, **dadurch gekennzeichnet, dass** die Distanzhalter als Netzrohrabschnitte (53) ausgebildet sind.

## Claims

1. Apparatus for the biological treatment of fluids, with at least one fixed-bed body which is arranged in a tank and is composed of a multiplicity of filler blocks made up of interconnected netting tubes (31), **characterized in that** at least part of the fixed-bed body (20, 54) is arranged on a carrying element in such a way that it is suspended in the tank (21).

2. Apparatus according to Claim 1, **characterized in that** the carrying element serves at the same time as a lifting element, it being possible for the suspended fixed-bed body (20, 54) to be inserted into the tank (21) or lifted out of the tank (21).

3. Apparatus according to Claim 1 or 2, **characterized in that** the fixed-bed body (20, 54) or part of the same can be releasably connected to the lifting element and/or the carrying element.

4. Apparatus according to one of the preceding claims, **characterized in that** the fixed-bed body (20) is formed by a number of part fixed-bed bodies (22, 23), which are formed by packed columns (29, 55) which are arranged next to one another in the longitudinal and transverse directions of the tank (21) and respectively comprise a number of filler blocks (28) arranged one on top of the other.

5. Apparatus according to one of the preceding claims, **characterized in that** a tie line, the upper end of which is releasably connected to the carrying element and/or the lifting element, extends through each packed column (29, 55).

6. Apparatus according to one of the preceding claims, **characterized in that** the carrying element and/or the lifting element is formed as a two-dimensional supporting framework, which has transverse members (35, 57) running parallel to one another at a distance from one another and longitudinal members (36, 58) connecting the said transverse members.

7. Apparatus according to one of the preceding claims, **characterized in that** all the packed columns (29, 55) of a row are suspended on each transverse member (35, 57).

8. Apparatus according to one of the preceding claims, **characterized in that** the tie lines running through each packed column (29, 55) are formed as carrying rods (37, 62), which have at the lower end a rest for the underside of the lowermost filler block (28) of each packed column (29, 55).

9. Apparatus according to Claim 8, **characterized in that** the respective rest is formed as a rest plate (38) which is connected to the lower end of each carrying rod (37, 62) and is supported under the end faces of preferably at least four neighbouring (central) netting tubes (31) for the forming of part of each filler block (28).

10. Apparatus according to one of the preceding claims, **characterized in that** those netting tubes (31) under whose end faces (30) the respective rest plate (38) bears fully or partly are set back with respect to the end faces (30) of the other outer netting tubes (31).

11. Apparatus according to one of the preceding claims, **characterized in that** the lifting element (33) has guiding means for centring the same with respect to the carrying rods (37) before they are connected to the lifting element, which means are formed as guiding tubes (49) which protrude downwards with respect to at least one transverse member (35) of the lifting element and engage in open upper end faces (30) of at least one netting tube (31) of at least some packed columns (29).

12. Apparatus according to one of the preceding claims, **characterized in that** the guiding tubes (49) are fixed by horizontally directed spacers (51).

13. Apparatus according to one of the preceding claims, **characterized in that** hold-down devices (64) for buoyancy prevention are arranged above the fixed-bed body (20, 54) or above the part fixed-bed bodies (22, 23) and rest with their dead weight on the fixed-bed body (20, 54) or the respective part fixed-bed body (22, 23).

14. Apparatus according to one of the preceding claims, **characterized in that** the hold-down devices are arranged at a distance above the fixed-bed body (20, 54) or the part fixed-bed bodies (22, 23) and are preferably supported by means of spacers on the fixed-bed body (20, 54) or the upper part fixed-bed body (22).

15. Apparatus according to one of the preceding claims, **characterized in that** the spacers are formed as netting tube portions (53).

## Revendications

1. Dispositif de traitement biologique de fluides comprenant au moins un corps de lit fixe placé dans un récipient et composé d'un grand nombre de blocs de corps de remplissage constitués de tubes en réseau (31) joints les uns aux autres, **caractérisé par le fait qu'**au moins une partie du corps de lit fixe (20, 54) est placée en étant suspendue à un organe support dans le récipient (21).

2. Dispositif selon la revendication 1, **caractérisé par le fait que** l'organe support sert en même temps d'organe élévateur, ce qui permet d'introduire le corps de lit fixe suspendu (20, 54) dans le récipient (21) et de l'en sortir.

3. Dispositif selon l'une des revendications 1 et 2, **caractérisé par le fait que** le corps de lit fixe (20, 54) ou une partie de celui-ci peut être joint(e) de manière détachable à l'organe élévateur et/ou à l'organe support.

4. Dispositif selon l'une des revendications précédentes, **caractérisé par le fait que** le corps de lit fixe (20) est formé de plusieurs corps partiels de lit fixe (22, 23) que sont formés de colonnes de corps de remplissage (29, 55) placées les unes à côté des autres dans la direction longitudinale et la direction transversale du récipient (21) et constituées chacune de plusieurs blocs de corps de remplissage (28) placés les uns au-dessus des autres.

5. Dispositif selon l'une des revendications précédentes, **caractérisé par le fait qu'**à travers chaque colonne de corps de remplissage (29, 55) s'étend un tirant dont l'extrémité supérieure est jointe de manière détachable à l'organe support et/ou à l'organe élévateur.

6. Dispositif selon l'une des revendications précédentes, **caractérisé par le fait que** l'organe support et/ou l'organe élévateur est constitué d'un bâti bidimensionnel qui présente des traverses parallèles espacées (35, 57) et des longerons (36, 58) qui relient celles-ci.

7. Dispositif selon l'une des revendications précédentes, **caractérisé par le fait qu'**à chaque traverse (35, 57) sont accrochées toutes les colonnes de corps de remplissage (29, 55) d'une rangée.

8. Dispositif selon l'une des revendications précédentes, **caractérisé par le fait que** les tirants qui traversent chaque colonne de corps de remplissage (29, 55) sont des tiges supports (37, 62) qui présentent à leur extrémité inférieure un appui pour le côté inférieur du bloc de corps de remplissage (28) inférieur de chaque colonne de corps de remplissage (29, 55).

9. Dispositif selon la revendication 8, **caractérisé par le fait que** l'appui est formé d'un plateau d'appui (38) joint à l'extrémité inférieure de chaque tige support (37, 62) et qui s'appuie sous les côtés frontaux de, de préférence, au moins quatre tubes en réseau voisins (centraux) (31) pour la formation d'une partie de chaque bloc de corps de remplissage (28).

10. Dispositif selon l'une des revendications précédentes, **caractérisé par le fait que** les tubes en réseau (31) sous les côtés frontaux (30) desquels le plateau d'appui (38) s'appuie entièrement ou partiellement sont reculés par rapport aux côtés frontaux (30) des autres tubes en réseau (31) extérieurs.

11. Dispositif selon l'une des revendications précédentes, **caractérisé par le fait que** l'organe élévateur (33) présente des moyens de guidage pour le centrage de celui-ci par rapport aux tiges supports (37) avant la jonction de celles-ci à l'organe élévateur, et ces moyens de guidage sont constitués de tubes de guidage (49) saillant vers le bas par rapport à au moins une traverse (35) de l'organe élévateur et qui s'engagent dans les côtés frontaux supérieurs ouverts (30) d'au moins un tube en réseau (31) d'au moins quelques colonnes de corps de remplissage (29).

12. Dispositif selon l'une des revendications précédentes, **caractérisé par le fait que** les tubes de guidage (49) sont fixés par des écarteurs dirigés horizontalement (51).

13. Dispositif selon l'une des revendications précédentes, **caractérisé par le fait qu'**au-dessus du corps de lit fixe (20, 54) ou au-dessus des corps partiels de lit fixe (22, 23) sont placés des éléments de maintien (64) destinés à empêcher une montée qui reposent par leur propre poids sur le corps de lit fixe (20, 54) ou le corps partiel de lit fixe (22, 23).

14. Dispositif selon l'une des revendications précédentes, **caractérisé par le fait que** les éléments de maintien sont placés à distance au-dessus du corps de lit fixe (20, 54) ou des corps partiels de lit fixe (22, 23) et s'appuient de préférence par l'intermédiaire d'écarteurs sur le corps de lit fixe (20, 54) ou le corps partiel de lit fixe supérieur (22).

15. Dispositif selon l'une des revendications précédentes, **caractérisé par le fait que** les écarteurs sont formés de tronçons de tubes en réseau (53).
